# EUROPÄISCHE PATENTSCHRIFT

(11) **EP 3 411 682 B1**
(45) Veröffentlichungstag und Bekanntmachung des Hinweises auf die Patenterteilung: **04.10.2023**
(21) Anmeldenummer: 17703672.0
(22) Anmeldetag: 26.01.2017
(51) Int. Cl.: G01J 9/00, G01J 1/04, G01J 1/42

(54) **ANORDNUNG UND VERFAHREN ZUR WELLENFRONTANALYSE**
ARRANGEMENT AND METHOD FOR WAVE FRONT ANALYSIS
ARRANGEMENT ET PROCEDE D'ANALYSE DE FRONT D'ONDE

(30) Priorität: 01.02.2016 DE 102016201485
(43) Veröffentlichungstag der Anmeldung: 12.12.2018
(73) Patentinhaber: Fraunhofer-Gesellschaft zur Förderung der angewandten Forschung e.V., 80686 München (DE); Westsächsische Hochschule Zwickau, 08056 Zwickau (DE)
(72) Erfinder: HARTMANN, Peter, 07973 Greiz (DE); BASELT, Tobias, 08056 Zwickau (DE); KABARDIADI, Alexander, 08058 Zwickau (DE)
(74) Vertreter: Pfenning, Meinig & Partner mbB
(86) Internationale Anmeldenummer: PCT/EP2017/051637
(87) Internationale Veröffentlichungsnummer: WO 2017/133960

(56) Entgegenhaltungen:
- EP-A2- 0 319 345
- WO-A2-2008/025958
- D'NARDO COLUCCI ET AL: "A reflective Shack-Hartmann wave-front sensor for adaptive optics", PUBLICATIONS OF THE ASTRONOMICAL SOCIETY OF THE PACIFIC, Bd. 106, 1. Oktober 1994 (1994-10-01), Seiten 1104-1110, XP055369848, US ISSN: 0004-6280, DOI: 10.1086/133484

## Beschreibung

Die vorliegende Erfindung betrifft eine Anordnung und ein Verfahren zur Wellenfrontanalyse.

Etablierte Methoden der Wellenfrontanalyse basieren auf einer Nutzung von periodisch angeordneten Aberrationszentren, beispielsweise bei der Hartmann-Shack-Wellenfrontanalyse. Wie in der Druckschrift DE 101 28 529 A1 offenbart, kann eine Kombination zwischen abbildenden Strukturen und positionsempfindlichen Messeinheiten genutzt werden, um Intensitäts-, Wellenfront- und Richtungsverteilungen von Strahlungsfeldern zu bestimmen. Die Nutzung von periodischen Aberrationseinheiten schränkt jedoch eine flexible Verwendung ein, da für eine nachfolgende Auswertung ermittelter Messdaten eine Mindestanzahl an Messinformationen vorausgesetzt wird. Dementsprechend muss ein zu vermessender Strahl zur Messung aufgeweitet werden oder bereits den entsprechenden Durchmesser besitzen. Die laterale Auflösung bleibt somit konstant und ist nicht skalierbar.

Zudem nutzt das in DE 101 28 529 A1 beschriebene Messverfahren und Messsystem refraktive optische Elemente, was eine spektrale Anwendbarkeit einschränkt.

Auch weitere aus dem Stand der Technik bekannte Systeme zur Wellenfrontanalyse müssen einen Kompromiss zwischen Auflösung und Dynamik finden, was in der Regel durch zusätzliche Aufbauten und somit höhere Kosten erfolgt.

Der vorliegenden Erfindung liegt daher die Aufgabe zugrunde, eine Anordnung und ein Verfahren vorzuschlagen, mittels derer Parameter einer Wellenfront eines elektromagnetischen Strahlungsfelds auch bei hohen Leistungsdichten des elektromagnetischen Strahlungsfelds analysierbar sind.

So ist ein System zur Bestimmung von Wellenfrontcharakteristiken von Laserstrahlung aus WO 2008/025958 A2 bekannt.

Von D'Nardo Colluci u.a. sind in "A reflective Shack-Hartmann wave-front sensor for adaptive optics"; Publications of the Astronimical Society of the Pacific; Bd. 106; 1. Oktober 1994 (1994-10-1); Seiten 1104-1110; XP055369848; US; ISSN: 00046280; DOI: 10.1086/133484 Möglichkeiten zur Wellenfrontanalyse beschrieben.

EP 0 319 345 A3 betrifft eine Vorrichtung zur Beeinflussung der Intensität eines Hochleistungslaserstrahls.

Diese Aufgabe wird erfindungsgemäß gelöst durch eine Anordnung nach Anspruch 1 und ein Verfahren nach Anspruch 9. Vorteilhafte Ausgestaltungen und Weiterbildungen werden in den Unteransprüchen beschrieben.

Die beschriebene optoelektronische Anordnung dient somit einer zuverlässigen und schnellen Bestimmung von Parametern einer Wellenfront direkt in einem Abbildungsstrahlengang eines Nutzwellenfelds der elektromagnetischen Strahlung ohne auf refraktive bzw. transmittierende Elemente zurückgreifen zu müssen, sondern eine oder mehrere ausschließlich diffraktiv oder reflektierend wirkende Strahlführungseinheiten. Absorptionsverluste im Werkstoff der abbildenden Elemente werden damit vermieden. Auch ist die Intensität des zu analysierenden Strahlungsfelds, d. h. die Intensität der zu analysierenden elektromagnetischen Strahlung nicht durch die Zerstörungsschwelle des Werkstoffs abbildender Elemente limitiert. Da das vorgeschlagene System durch die Öffnungen der Strahlführungseinheit auf abbildende Eigenschaften von Lochblenden zurückgreift, ist es spektral unabhängig und in einem weiten Spektralbereich verwendbar. Zudem kann auch bei sehr hochdynamischen Wellenfronten eine große lokale angulare Auflösung gewährleistet werden.

Es kann vorgesehen sein, dass zumindest die Strahlführungseinheit, die Detektoreinheit oder die Auswerteeinheit relativ zu der Strahlungsquelle in mindestens zwei Freiheitsgraden bewegbar ausgebildet sind. Es sollte jedoch im Allgemeinen zumindest die Strahlführungseinheit und die Detektoreinheit gemeinsam bewegbar sein. Durch die bewegliche Ausführung der Bauteile wird eine Flexibilität der beschriebenen Anordnung erhöht.

Alternativ können die Strahlführungseinheit, die Detektoreinheit und die Auswerteeinheit aber auch ortsfest in Bezug zu der Strahlungsquelle angeordnet sein, um einen kompakten Aufbau zu ermöglichen.

Die Strahlführungseinheit kann als ein sphärischer Spiegel, ein asphärischer Spiegel oder ein freigeformter, d. h. beliebig geformter Spiegel ausgebildet sind, um die gewünschten Reflexionseigenschaften zu erreichen.

Die mindestens eine Strahlführungseinheit sollte eine Oberfläche aufweisen, auf der die elektromagnetische Strahlung auftrifft, die eine die elektromagnetische Strahlung reflektierende Schicht, ein die elektromagnetische Strahlung reflektierendes Schichtsystem oder ein Reflexionshologramm aufweist. Hierdurch können die Reflexionseigenschaften flexibel gestaltet werden. Die Oberfläche kann hierbei derart gestaltet sein, dass möglichst geringe optische Verluste bei der Reflexion auftreten.

Die Öffnungen können in Form eines Kreises, eines Kreuzes, einer Linie, eines Rechtecks, eines Dreiecks, eines Trapezes, einer Raute oder in einer beliebigen weitern Form ausgestaltet sein. Sofern mehrere Öffnungen verwendet werden, können alle diese Öffnungen eine gleiche Form aufweisen oder sich zumindest teilweise in ihrer Form unterscheiden. Ebenso können alle Öffnungen eine gleiche Größe oder zumindest eine der Öffnungen eine von den weitern Öffnungen verschiedene Größe aufweisen, sich also zumindest teilweise in ihrer Form unterscheiden. Typischerweise sind die Öffnungen periodisch angeordnet, weisen also insbesondere einen jeweils gleich großen Abstand zueinander auf. Es kann aber auch vorgesehen sein, dass der Abstand zwischen den Öffnungen zumindest bei einem Paar der Öffnungen von dem Abstand bei weiteren Paaren der Öffnungen abweicht.

Zum Kühlen und Abführen von durch die auftreffende elektromagnetische Strahlung erzeugter Wärme können die Detektoreinheit und bzw. oder die Strahlführungseinheit mindestens einen Kühlkanal aufweisen. Hierbei erfolgt typischerweise eine aktive Kühlung über eine Rückseite, also eine der auftreffenden elektromagnetischen Strahlung abgewandte Seite.

Die Detektoreinheit kann als ein positionsempfindlicher Detektor (Position Sensitive Device, PSD), als eine Vierquadrantendiode, als ein CCD-Sensor (Charge Coupled Device) oder als Videosystem ausgebildet sein, um zuverlässig eine ortsaufgelöste Messung der Beugungsstruktur durchführen zu können.

Bei einem Verfahren zur Wellenfrontanalyse wird mittels einer Strahlungsquelle elektromagnetische Strahlung mit einer zu analysierenden elektromagnetischen Wellenfront emittiert und die elektromagnetische Strahlung durch mindestens eine Strahlführungseinheit geführt, die nur diffraktiv und bzw. oder reflektierend ausgebildet ist sowie mindestens Öffnungenaufweist, und damit reflektiert und gebeugt. Die elektromagnetische Wellenfront wird mittels einer zweidimensional und ortsauflösenden Detektoreinheit, die in Ausbreitungsrichtung der elektromagnetischen Strahlung hinter der Öffnung der Strahlführungseinheit angeordnet ist, detektiert sowie mit einer mit der Detektoreinheit verbundenen elektronischen Auswerteeinheit ausgewertet.

Durch die gleichzeitige Reflexion eines Teils der elektromagnetischen Strahlung und die Beugung eines weiteren Teils kann effizient sowohl eine Wellenfrontanalyse durchgeführt werden, als auch die zu analysierende elektromagnetische Strahlung für weitere Zwecke verwendet werden.

Als elektromagnetische Strahlung wird vorzugsweise mindestens eine Wellenlänge aus dem Wellenlängenbereich zwischen fernem Ultraviolettlicht und Infrarotlicht verwendet, also mindestens eine Wellenlänge aus dem Bereich zwischen 200 nm und 1 mm.

Das beschriebene Verfahren wird typischerweise mit der beschriebenen Vorrichtung durchgeführt; die beschriebene Vorrichtung ist also zum Durchführen des beschriebenen Verfahrens eingerichtet.

Ausführungsbeispiele der Erfindung sind in den Zeichnungen dargestellt und werden nachfolgend anhand der Figuren 1 bis 4 erläutert.

Es zeigen:
- Fig. 1: eine schematische Darstellung einer Anordnung zur Wellenfrontanalyse mit einer sphärisch geformten Strahlführungseinheit;
- Fig. 2: mehrere mögliche Formen einer Öffnung in der Strahlführungseinheit;
- Fig. 3: eine Figur 1 entsprechende Darstellung mit einer diffraktiven Struktur als Strahlführungseinheit und
- Fig. 4: eine Figur 1 entsprechende Darstellung mit einer Anordnung, bei der mehrere Teilstrahlen gebildet werden.

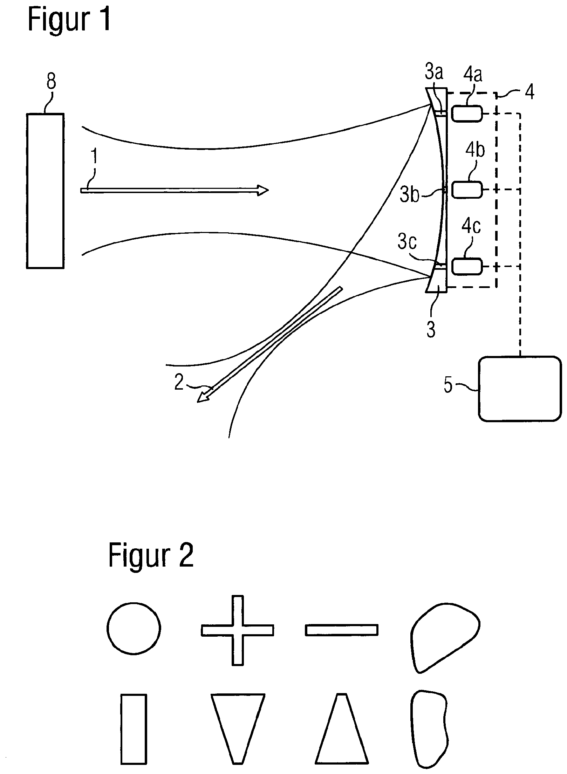

In Figur 1 ist in einer schematischen seitlichen Ansicht eine Anordnung zur Wellenfrontanalyse dargestellt. Eine Strahlungsquelle 8 emittiert elektromagnetische Strahlung 1 im sichtbaren Wellenlängenbereich zwischen 400 nm und 780 nm. In weiteren Ausführungsbeispielen kann die Strahlungsquelle 8 auch alternativ oder zusätzlich elektromagnetische Strahlung im ultravioletten Wellenlängenbereich bzw. im infraroten Wellenlängenbereich emittieren. Die elektromagnetische Strahlung 1 trifft als Messlicht in einem Nutzstrahlengang auf eine im dargestellten Ausführungsbeispiel reflektierend ausgestaltete Strahlführungseinheit 3 mit abbildender Wirkung. Die Strahlführungseinheit 3 ist hierbei ein sphärischer Spiegel, kann in weiteren Ausführungsformen aber auch ein asphärischer Spiegel oder ein beliebig geformter Spiegel sein. Ein reflektierter Anteil 2 der elektromagnetischen Strahlung 1 wird zur weiteren Verwendung als Strahl weggeleitet. Eine der Strahlungsquelle 8 zugewandte Vorderseite der Strahlführungseinheit 3 ist so gestaltet, dass möglichst geringe optische Verluste bei der Reflexion auftreten. Dies kann durch eine entsprechend gewählte Beschichtung mit einer oder mehreren Schichten, also einem Schichtsystem, erfolgen.

Die Strahlführungseinheit 3 weist mehrere periodisch angeordnete Löcher 3a, 3b, 3c jeweils gleicher Form und Größe auf, an denen ein Teil der elektromagnetischen Strahlung 1 gelangt und an den Öffnungen 3a, 3b, 3c gebeugt wird. In weiteren Ausführungsbeispielen kann zumindest eine der Öffnungen 3a, 3b, 3c eine von den andere Öffnungen 3a, 3b, 3c abweichende Größe oder Form haben und bzw. oder die Anordnung aperiodisch sein. Die Öffnungen 3a, 3b, 3c sind hierbei in ihrer Form so gewählt, dass das an den Öffnungen 3a, 3b, 3c gebeugte Messlicht mit maximalem Informationsgehalt analysiert werden kann. Die Größe der Öffnungen 3a, 3b, 3c ist relativ zur Querschnittsfläche des auftreffenden Strahls der elektromagnetischen Strahlung 1 so gering gewählt, dass nur sehr geringe Anteile dieses Nutzwellenfelds, d. h. der elektromagnetischen Strahlung 1 auskoppeln, so dass die auftreffende elektromagnetische Strahlung 1 weitgehend unbeeinflusst von den Öffnungen 3a, 3b, 3c reflektiert wird. In Ausbreitungsrichtung der elektromagnetischen Strahlung 1 hinter der Strahlführungseinheit 3 angeordnet sind jeweils einer der Öffnungen 3a, 3b, 3c zugeordnete Detektoren 4a, 4b, 4c, die zusammen eine Detektoreinheit 4 bilden und jeweils als optische Positionssensoren in Form eines PSD-Sensors ausgebildet sind. In weiteren Ausführungsbeispielen kann aber auch zumindest einer der Detektoren 4a, 4b, 4c einen von den anderen abweichenden Typ aufweisen, also beispielsweise ein CCD-Detektor sein. Das zu untersuchende Strahlungsfeld, d. h. die zu analysierende elektromagnetische Strahlung 1 wird mittels Reflexion an der Strahlführungseinheit 3 umgelenkt bzw. abgelenkt.

Die Detektoreinheit 4 ist ein analoges oder digitales Bauelement und elektrisch mit einer elektronischen Auswerteeinheit 5 verbunden, die Signale der Detektoreinheit 4 empfängt und auswertet sowie auf einer Ausgabeeinheit die Signale der Detektoreinheit 4 und bzw. oder die aus der Auswertung bzw. Analyse erlangten Informationen, beispielsweise einem Monitor oder Display, darstellt. Durch die gezeigte optoelektronische Anordnung können somit Parameter einer optischen Wellenfront direkt in einem Abbildungsstrahlengang eines Nutzwellenfelds und ohne einen Einsatz von refraktiven und transmittierenden Elementen (wie z. B. Linsen, Prismen oder Strahlteilerplatten) erlangt werden. Mit dem dargestellten System kann auch bei sehr hochdynamischen Wellenfronten eine große lokale angulare Auflösung erreicht werden.

Die in Figur 1 gezeigte Anordnung kann ortsfest im Hinblick auf die Strahlungsquelle 8 angeordnet sein, es ist aber auch möglich, die Strahlführungseinheit 3, die Detektoreinheit 4 und die elektronische Auswerteeinheit 5 oder zumindest eines der genannten Bauteile in mindestens zwei Freiheitsgraden bezüglich der Strahlungsquelle 8 zu mechanisch oder optisch bewegen. Dies kann beispielsweise durch einen auf einem Verschiebetisch mit zwei zueinander senkrecht stehenden Bewegungsachsen angeordneten Aufbau der genannten Bauteile erfolgen. Es kann auch eine einteilige Ausgestaltung der Anordnung mit fest miteinander verbundenen Bauteilen vorgesehen sein. Alternativ kann natürlich auch zumindest eines der Bauteile der Anordnung lösbar von der restlichen Anordnung ausgeführt sein.

Im Gegensatz zu bereits bekannten Hartmann-Shack-Systemen wird mit der dargestellten Anordnung nicht die Lage des Maximums des an den Öffnungen 3a, 3b, 3c gebeugten Messlichts, sondern das vollständige Beugungsmuster der Messlichtanteile analysiert sowie an der zweidimensionalen und ortsaufgelöst messenden Detektoreinheit 4 ohne weitere optische Abbildung registriert sowie durch die Auswerteeinheit 5 analysiert. Aus ein oder mehreren Messungen wird von der Auswerteeinheit 5 die Wellenfront bzw. werden Parameter der Wellenfront beispielsweise über Zernicke-Polynome moduliert und somit eine vollständige Form der zu messenden bzw. zu analysierenden Wellenfront rekonstruiert Es erfolgt daher eine direkte optische Abbildung eines zu untersuchenden Wellenfelds in einem Einzelstrahlengang. Die gezeigte optische Anordnung ist somit Bestandteil eines Abbildungsstrahlengangs eines optischen Geräts.

In Figur 2 sind mehrere mögliche Formen der Öffnungen 3a, 3b, 3c dargestellt. Die Öffnungen 3a, 3b, 3c können rund, ellipsenförmig, kreuzförmig, linienförmig, trapezförmig, rautenförmig oder in einer beliebigen anderen Form ausgestaltet sein. Wiederkehrende Merkmale sind in dieser wie auch in den folgenden Figuren mit identischen Bezugszeichen versehen.

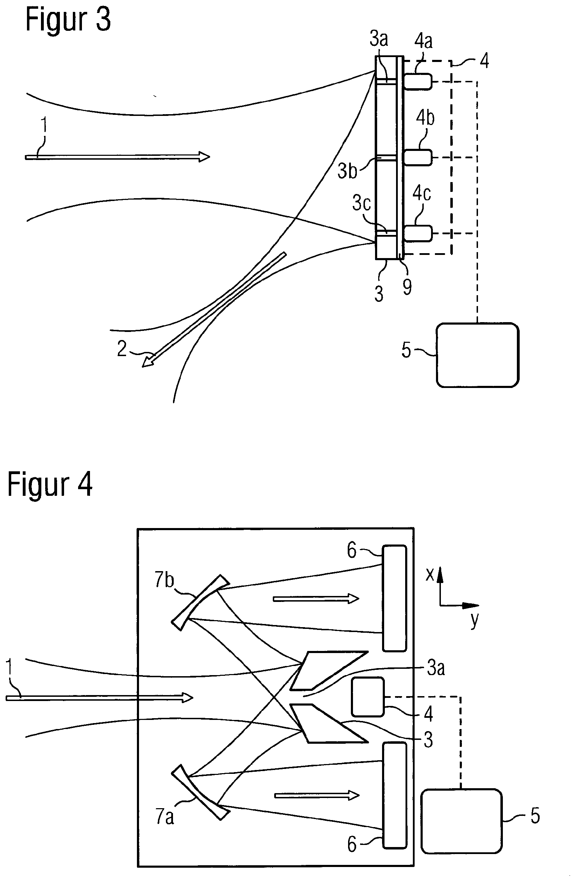

Figur 3 zeigt in einer Figur 1 entsprechenden Darstellung ein weiteres Ausführungsbeispiel der Anordnung, bei dem allerdings aus Übersichtsgründen auf eine Darstellung der Strahlungsquelle 8 verzichtet wurde und statt eines sphärischen Spiegels nun eine diffraktive reflektierende Struktur in Form eines Hologramms das Strahlführungselement 3 bildet. Zudem ist nun an einer der Strahlungsquelle 8 abgewandten Rückseite des Strahlführungselements 3 ein Kühlkanal 9 angeordnet, der ebenso die Detektoreinheit 4 berührt und durch Auftreffen der elektromagnetischen Strahlung 1 entstehende Wärme an den mit ihm in unmittelbarem Kontakt stehenden Bauteilen, also der Strahlführungseinheit 3 und der Detektoreinheit 4 abführen soll. Der Kühlkanal 9 kann natürlich ebenso auch bei den weiteren dargestellten Ausführungsbeispielen verwendet werden.

Eine weitere Ausführungsform ist in Figur 4 dargestellt, wobei in diesem Fall die von der (aus Übersichtsgründen nicht dargestellten) Strahlungsquelle 8 ausgesandte und auf die Strahlführungseinheit 3 auftreffende elektromagnetische Strahlung 1 durch die Strahlführungseinheit 3 in zwei reflektierte Teilstrahlen nach Auskopplung des auf die Detektoreinheit 4 auftreffenden Messlichts aufgespalten wird, die jeweils über ein Spiegelsystem 7a, 7b auf einem Strahlungsabsorber 6 auftreffen.

In einem weiteren Ausführungsbeispiel kann auch das zu analysierende Strahlungsfeld, d. h. die elektromagnetische Strahlung 1 direkt auf eine Strahlfalle auftreffen, die mit Kühlvorrichtungen versehen ist, um die Energie des Strahlungsfelds abzuführen.

## Patentansprüche

1. Anordnung zur Wellenfrontanalyse mit
einer Strahlungsquelle (8), die eine zu analysierende elektromagnetische Wellenfront elektromagnetischer Strahlung (1) emittiert,
einer zweidimensional und ortsaufgelöst messenden Detektoreinheit (4, 4a, 4b, 4c) zum Detektieren der elektromagnetischen Wellenfront, einer mit der Detektoreinheit (4, 4a, 4b, 4c) verbundenen elektronischen Auswerteeinheit (5, 7),
**dadurch gekennzeichnet, dass**
die Anordnung mindestens eine Strahlführungseinheit (3) zum Führen der elektromagnetischen Strahlung (1) aufweist, die nur diffraktiv und/oder reflektierend ausgebildet ist, und mehrere Öffnungen (3a, 3b, 3c) aufweist, wobei die Detektoreinheit (4, 4a, 4b, 4c) in Ausbreitungsrichtung der elektromagnetischen Strahlung (1) hinter den Öffnungen (3a, 3b, 3c) der Strahlführungseinheit (3) zum Detektieren eines Beugungsmusters der an den Öffnungen (3a, 3b, 3c) gebeugten elektromagnetischen Strahlung (1) angeordnet und aus mehreren Detektoren (4a, 4b, 4c) ausgebildet ist, von denen jeder einer der Öffnungen (3a, 3b, 3c) zugeordnet ist um das vollständige Beugungsmuster des an den Öffnungen gebeugten Messlichts zu registrieren,
wobei die elektronische Auswerteeinheit (5, 7) eingerichtet ist, das vollständige Beugungsmuster des an den Öffnungen (3a, 3b, 3c) gebeugten Messlichts der elektromagnetischen Wellenfront zu analysieren.

2. Anordnung nach Anspruch 1, **dadurch gekennzeichnet, dass** zumindest die Strahlführungseinheit (3), die Detektoreinheit (4, 4a, 4b, 4c) oder die Auswerteeinheit (5, 7) relativ zu der Strahlungsquelle (8) in mindestens zwei Freiheitsgraden bewegbar ausgebildet ist.

3. Anordnung nach Anspruch 1, **dadurch gekennzeichnet, dass** die Strahlführungseinheit (3), die Detektoreinheit (4, 4a, 4b, 4c) und die Auswerteeinheit (5, 7) ortsfest in Bezug zu der Strahlungsquelle (8) angeordnet sind.

4. Anordnung nach einem der vorhergehenden Ansprüche, **dadurch gekennzeichnet, dass** die Strahlführungseinheit (3) als ein sphärischer Spiegel, ein asphärischer Spiegel oder ein freigeformter Spiegel ausgebildet ist und/oder eine diffraktive optische Struktur aufweist.

5. Anordnung nach einem der vorhergehenden Ansprüche, **dadurch gekennzeichnet, dass** die mindestens eine Strahlführungseinheit (3) eine Oberfläche, auf der die elektromagnetische Strahlung (1) auftrifft, die eine die elektromagnetische Strahlung (1) reflektierende Schicht, ein die elektromagnetische Strahlung (1) reflektierendes Schichtsystem oder ein Reflexionshologramm aufweist.

6. Anordnung nach einem der vorhergehenden Ansprüche, **dadurch gekennzeichnet, dass** die mindestens eine Öffnung (3a, 3b, 3c) in Form eines Kreises, eines Kreuzes, einer Linie, eines Rechtecks, eines Dreiecks, eines Trapezes oder einer Raute ausgestaltet ist.

7. Anordnung nach einem der vorhergehenden Ansprüche, **dadurch gekennzeichnet, dass** die Detektoreinheit (4, 4a, 4b, 4c) und/oder die Strahlführungseinheit (3) mindestens einen Kühlkanal (9) aufweist.

8. Anordnung nach einem der vorhergehenden Ansprüche, **dadurch gekennzeichnet, dass** die Detektoreinheit (4, 4a, 4b, 4c) als ein positionsempfindlicher Detektor, eine Vierquadrantendiode, ein CCD-Sensor oder als Videosystem ausgebildet ist.

9. Verfahren zur Wellenfrontanalyse, bei dem mittels
einer Strahlungsquelle (8) elektromagnetische Strahlung (1) mit einer zu analysierenden elektromagnetischen Wellenfront emittiert wird,
die elektromagnetischen Strahlung (1) durch mindestens eine Strahlführungseinheit (3), die nur diffraktiv und/oder reflektierend ausgebildet ist und Öffnungen (3a, 3b, 3c) aufweist, geführt und damit reflektiert und gebeugt wird, und
mittels einer zweidimensional und ortsauflösenden Detektoreinheit (4, 4a, 4b, 4c), die in Ausbreitungsrichtung der elektromagnetischen Strahlung (1) hinter den Öffnungen (3a, 3b, 3c) der Strahlführungseinheit (3) angeordnet und aus mehreren Detektoren (4, 4b, 4c) ausgebildet ist, von denen jeder einer der Öffnungen (3a, 3b, 3c) zugeordnet ist, das vollständige Beugungsmuster des an den Öffnungen gebeugten Messlichts detektiert wird, sowie mit einer mit der Detektoreinheit (4, 4a, 4b, 4c) verbundenen elektronischen Auswerteeinheit (5, 7) ein vollständiges Beugungsmuster des an den Öffnungen gebeugten Messlichts ausgewertet wird.

10. Verfahren nach Anspruch 9, **dadurch gekennzeichnet, dass** als elektromagnetische Strahlung mindestens eine Wellenlänge aus dem Wellenlängenbereich zwischen fernem Ultraviolettlicht und Infrarotlicht verwendet wird.

## Claims

1. An arrangement for wavefront analysis comprising:
a radiation source (8) that emits an electromagnetic wavefront of electromagnetic radiation (1) to be analyzed;
a two-dimensional detector unit (4, 4a, 4b, 4c) measuring with spatial resolution for detecting the electromagnetic wavefront;
an electronic evaluation unit (5, 7) connected to the detector unit (4, 4a, 4b, 4c),
**characterized in that**
the arrangement comprises at least one beam guidance unit (3) for guiding the electromagnetic radiation (1) that is designed to be only diffractive and/or reflective and that has a plurality of openings (3a, 3b, 3c),
the detector unit (4, 4a, 4b, 4c) being arranged behind the openings (3a, 3b, 3c) of the beam guidance unit (3) in the direction of propagation of the electromagnetic radiation (1) for detecting a diffraction pattern of the electromagnetic radiation (1) diffracted at the openings (3a, 3b, 3c) and being formed of a plurality of detectors (4a, 4b, 4c), each of which is assigned to one of the openings (3a, 3b, 3c) so as to register the complete diffraction pattern of the measurement light diffracted at the openings,
the electronic evaluation unit (5, 7) being configured to analyze the complete diffraction pattern of the measurement light of the electromagnetic wavefront diffracted at the openings (3a, 3b, 3c).

2. The arrangement according to claim 1, **characterized in that** at least the beam guidance unit (3), the detector unit (4, 4a, 4b, 4c) or the evaluation unit (5, 7) is designed to be movable in at least two degrees of freedom relative to the radiation source (8).

3. The arrangement according to claim 1, **characterized in that** the beam guidance unit (3), the detector unit (4, 4a, 4b, 4c) and the evaluation unit (5, 7) are arranged in a fixed position with respect to the radiation source (8).

4. The arrangement according to any one of the preceding claims, **characterized in that** the beam guidance unit (3) is designed as a spherical mirror, an aspherical mirror or a free-formed mirror and/or has a diffractive optical structure.

5. The arrangement according to any one of the preceding claims, **characterized in that** the at least one beam guidance unit (3) has a surface on which the electromagnetic radiation (1) is incident and which has a layer reflecting the electromagnetic radiation (1), a layer system reflecting the electromagnetic radiation (1) or a reflection hologram.

6. The arrangement according to any one of the preceding claims, **characterized in that** the at least one opening (3a, 3b, 3c) is configured in the form of a circle, a cross, a line, a rectangle, a triangle, a trapezoid or a diamond.

7. The arrangement according to any one of the preceding claims, **characterized in that** the detector unit (4, 4a, 4b, 4c) and/or the beam guidance unit (3) include at least one cooling passage (9).

8. The arrangement according to any one of the preceding claims, **characterized in that** the detector unit (4, 4a, 4b, 4c) is designed as a position-sensitive sensor, a four quadrant diode, a CCD sensor or a video system.

9. A method for wavefront analysis, in which electromagnetic radiation (1) having an electromagnetic wavefront to be analyzed is emitted by means of a radiation source (8);
the electromagnetic radiation (1) is guided by at least one beam guidance unit (3), which is designed to be only diffractive and/or reflective and has openings (3a, 3b, 3c), and is thus reflected and diffracted; and
the complete diffraction pattern of the measurement light diffracted at the openings is detected by means of a two-dimensional detector unit (4, 4a, 4b, 4c) measuring with spatial resolution, which is arranged behind the openings (3a, 3b, 3c) of the beam guidance unit (3) in the direction of propagation of the electromagnetic radiation (1) and is formed of a plurality of detectors (4, 4b, 4c), each of which is assigned to one of the openings (3a, 3b, 3c); and
a complete diffraction pattern of the measurement light diffracted at the openings is evaluated by an electronic evaluation unit (5, 7) connected to the detector unit (4, 4a, 4b, 4c).

10. The method according to claim 9, **characterized in that** at least one wavelength from the wavelength range between far ultraviolet light and infrared light is used as the electromagnetic radiation.

## Revendications

1. Dispositif pour l'analyse d'un front d'onde avec
une source de rayonnement (8), qui émet un front d'onde électromagnétique à analyser d'un rayonnement électromagnétique (1),
une unité de détecteur (4, 4a, 4b, 4c), mesurant de manière bi-dimensionnelle et avec une résolution spatiale, pour la détection du front d'onde électromagnétique,
une unité d'analyse électronique (5, 7) reliée à l'unité de détecteur (4, 4a, 4b, 4c),
**caractérisé en ce que**
le dispositif comprend au moins une unité de guidage du rayonnement (3) pour le guidage du rayonnement électromagnétique (1), qui est conçue de façon à être uniquement diffractive et/ou réfléchissante, et plusieurs ouvertures (3a, 3b, 3c),
dans lequel l'unité de détecteur (4, 4a, 4b, 4c) est disposée, dans la direction de propagation du rayonnement électromagnétique (1), derrière les ouvertures (3a, 3b, 3c) de l'unité de guidage de rayonnement (3), pour la détection d'un motif de diffraction du rayonnement électromagnétique (1) diffracté au niveau des ouvertures (3a, 3b, 3c) et est constituée de plusieurs détecteurs (4a, 4b, 4c), chaque détecteur correspondant à une des ouvertures (3a, 3b, 3c), afin d'enregistrer tout le motif de diffraction de la lumière de mesure diffractée au niveau des ouvertures,
dans lequel l'unité d'analyse électronique (5, 7) est conçue pour analyser tout le motif de diffraction de la lumière de mesure du front d'onde électromagnétique diffracté au niveau des ouvertures (3a, 3b, 3c).

2. Dispositif selon la revendication 1, **caractérisé en ce qu'**au moins l'unité de guidage de rayonnement (3), l'unité de détecteur (4, 4a, 4b, 4c) ou l'unité d'analyse (5, 7) est conçue de façon à être mobile, par rapport à la source de rayonnement (8), dans au moins deux degrés de liberté.

3. Dispositif selon la revendication 1, **caractérisé en ce qu'**au moins l'unité de guidage de rayonnement (3), l'unité de détecteur (4, 4a, 4b, 4c) et l'unité d'analyse (5, 7) sont disposées de manière fixe par rapport à la source de rayonnement (8).

4. Dispositif selon l'une des revendications précédentes, **caractérisé en ce que** l'unité de guidage de rayonnement (3) est conçue comme un miroir sphérique, un miroir asphérique ou un miroir de forme libre et/ou présente une structure optique diffractive.

5. Dispositif selon l'une des revendications précédentes, **caractérisé en ce que** l'au moins une unité de guidage de rayonnement (3) comprend une surface sur laquelle arrive le rayonnement électromagnétique (1), qui comprend une couche réfléchissant le rayonnement électromagnétique (1), un système de couches réfléchissant le rayonnement électromagnétique (1) ou un hologramme de réflexion.

6. Dispositif selon l'une des revendications précédentes, **caractérisé en ce que** l'au moins une ouverture (3a, 3b, 3c) présente la forme d'un cercle, d'une croix, d'une ligne, d'un rectangle, d'un triangle, d'un trapèze ou d'un losange.

7. Dispositif selon l'une des revendications précédentes, **caractérisé en ce que** l'unité de détecteur (4, 4a, 4b, 4c) et/ou l'unité de guidage de rayonnement (3) comprend au moins un canal de refroidissement (9).

8. Dispositif selon l'une des revendications précédentes, **caractérisé en ce que** l'unité de détecteur (4, 4a, 4b, 4c) est conçue comme un détecteur sensible à la position, une diode à quatre quadrants, un capteur CCD ou un système vidéo.

9. Procédé d'analyse d'un front d'onde, dans lequel, au moyen d'une source de rayonnement (8), un rayonnement électromagnétique (1) avec un front d'onde électromagnétique à analyser est émis,
le rayonnement électromagnétique (1) est guidé et donc réfléchi et diffracté à l'aide d'au moins une unité de guidage de rayonnement (3), qui est conçue de manière uniquement diffractive et/ou réfléchissante et qui comprend des ouvertures (3a, 3b, 3c) et
au moyen d'une unité de détecteur (4, 4a, 4b, 4c), qui est disposée, dans la direction de propagation du rayonnement électromagnétique (1), derrière les ouvertures (3a, 3b, 3c) de l'unité de guidage de rayonnement (3) et qui est constituée de plusieurs détecteurs (4, 4b, 4c), chacun d'eux correspondant à une des ouvertures (3a, 3b, 3c), tout le motif de diffraction de la lumière de mesure diffractée au niveau des ouvertures est détecté et,
avec une unité d'analyse électronique (5, 7), reliée à l'unité de détecteur (4, 4a, 4b, 4c), un motif de diffraction entier de la lumière de mesure diffractée au niveau des ouvertures est analysé.

10. Procédé selon la revendication 9, **caractérisé en ce que**, en tant que rayonnement électromagnétique, au moins une longueur d'onde dans la plage de longueurs d'ondes entre l'ultraviolet lointain et l'infrarouge est utilisée.
